# EUROPEAN PATENT APPLICATION

(11) **EP 2 466 118 A1**
(43) Date of publication of application: **20.06.2012**
(21) Application number: 10382336.5
(22) Date of filing: 15.12.2010
(51) Int. Cl.: F03B 13/16, F03B 13/18, F03B 13/20

(54) **Power take-off device for wave energy transformation**

(71) Applicant: Fundacion Inasmet, 20009 San Sebastian (Guipuzcoa) (ES)
(72) Inventor: Lasa Aguirrebengoa, Joseba, 20009 San Sebastian (Guipuzcoa) (ES); Antolín Urbaneja, Juan Carlos, 20009 San Sebastian (Guipuzcoa) (ES); Estensoro Astigarraga, Francisco Jose, 20009 San Sebastian (Guipuzcoa) (ES)
(74) Representative: Carpintero Lopez, Francisco

(57) **Abstract**

Power take off dispositive for wave energy transformation with at least one hydraulic cylinder coupled to activating means such that the cylinder is capable of generating a predetermined braking torque on an energy capture device such that the PTO can transform a predetermined oscillating movement at low frequency and high torque to continuous, relatively high frequency and low torque able to couple to an electric generator. The power take off of the invention is thus is capable of optimizing the energy conversion for all types of seas and waves.

## Description

### FIELD OF THE INVENTION

The present invention relates to a system for power extraction from water waves, particularly ocean waves. The invention relates specifically to a power take-off system (PTO), which is a component of a wave energy converter (WEC) for power extraction.

### STATE OF THE ART

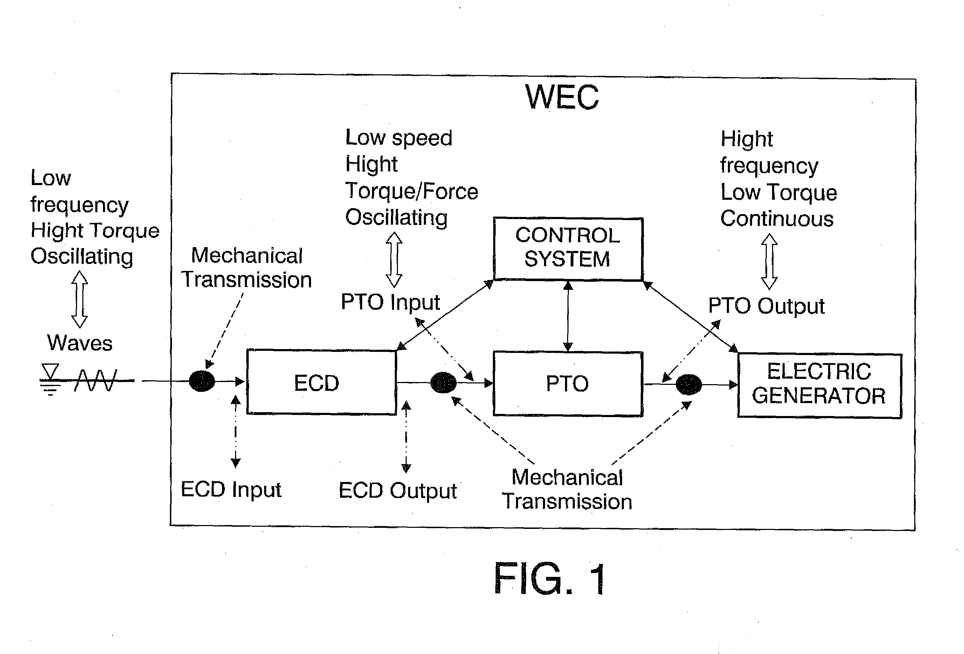

The development of wave energy converters has been the focus of attention from engineers and scientists over the past 25 years. The main components in a wave energy converter (WEC) are schematically represented in figure 1. They include: a) an energy capture device (ECD) moved by the action of waves, b) a power take-off system (PTO) which transforms the incoming movement from the ECD oscillating at low speed and high torque/force, to a continuous and relatively high frequency but low torque movement, c) an electric generator and d) a control system which manages all the WEC. The output movement of the PTO should be suitable for electricity generation via the electric generator.

The captured energy from the sea by the ECD is absorbed by the PTO applying a braking torque/force on the output mechanical transmission means of the ECD. The braking torque/force of the PTO multiplied by the instantaneous speed of the PTO input mechanical transmission means during the braking motion gives the total amount of energy captured. As it can be observed in figure 1, the ECD output mechanical transmission means is coupled to the PTO input mechanical transmission means (similar torque/force and same speed). The same can be said to the coupling between the PTO output and the generator.

Most recent PTOs of particular WECs can be adjusted for a predictable forecasted and specific sea state to maximize power extraction. The amount of wave power which can be extracted depends on the sea state which is defined by the wave period, T, and the significant wave height, Hs, which is the average wave height (trough to crest) of the highest third of the waves.

The energetic efficiency and economic viability of a WEC depends mainly on the PTO, which transforms the predictable but oscillating, low speed and high torque/force incoming wave power, into continuous and relatively high frequency and low torque usable power for electricity generation.

PTOs in recent WEC related patents are described with little degree of detail and their operation is not clearly explained.

For instance, the WEC described in US 7,581,901 B2 patent bases the energy extraction on the relative movement between two point absorbers. The PTO design comprises hydraulic cylinders, accumulators and one motor.

The EP 1,623,110 B1 patent describes the extraction of energy from the oscillation of a platform due to the movement of the waves in the sea bottom. The extraction of the energy is carried out by means of an intermediate torsional pump.

The US 7,579,704 B2 patent describes a WEC that includes rotationally supported arms which have floats at their free ends, so that the translational movement of the floats caused by waves results in rotation of the arms. The PTO consists of hydraulic cylinders and a hydraulic motor with variable displacement volume per revolution to compensate changes in the wave climate, called also sea state, being a simple solution with clear energy efficiency limitations.

The US 7,443,045 B2 patent describes the extraction units to form an articulated chain. The relative movement of energy from the relative movement between a plurality of wave-operated-members, being interconnected by linkage is controlled by hydraulic cylinders connected to high pressure accumulators and hydraulic motors through a control unit. The pressure in the accumulators is matched to the incident sea state.

The prior art does not describe how the corresponding PTOs are adapted to each sea state, except in US 7,443,045 B2, where the pressure in their accumulators is adjusted to the incident sea state, and in US 7,579,704 B2, where a hydraulic motor variable displacement volume per revolution is used to compensate sea state changes.

None of the systems describe how to adapt the PTO wave-to-wave within a given sea state. This adaptability is basic to optimize the power captured by the WEC. The power that can be extracted by a WEC varies a lot depending on the incident sea state and, ultimately, on each individual wave.

Thus, there is a need for a PTO that can optimize power capture across a range of sea states and individual waves and, in consequence, to increase the global efficiency and the economic viability of the WEC.

### SUMMARY OF THE INVENTION

In order to solve the problem posed, the invention provides a PTO according to claim 1.

The PTO of the invention allows optimizing power capture across a range of sea states and individual waves by means of applying a controlled braking torque in a flexible and precise way to the output mechanical transmission means of the energy capture device (ECD). Flexibility is related to the capability of applying different values of the braking torque over the output mechanical transmission means of the ECD and precision is related to the type and amount of parameters used to adjust the values of the braking torque.

The ECD coupled to the PTO of the invention must fulfil with some basic requirements: its output must be an oscillating movement (around a pivoting axis) of low speed and high torque/force. In the present invention this output of the ECD is called the output mechanical transmission means and the oscillating axis is called pivoting axis.

The instantaneous position, speed and acceleration of the ECD output mechanical transmission means determine the selection of optimum parameters to control continuously the braking torque that the PTO should apply over the ECD and also the selection of the optimum parameters that establish the state of the electric generator. This optimization of parameters is carried out by the control system.

The PTO of the invention can comprise at least one hydraulic cylinder controlled by a valves block, at least one high pressure and one low pressure accumulators, a control valve, a hydraulic motor and at least two hydraulic cylinder fixation systems, each of which with an activation system (electromechanical or hydraulic) and a hydraulic interlock. A first fixation system connects the first end of the cylinder with the ECD output mechanical transmission means, while a second fixation system connects the second end of the cylinder with the structure of the WEC. The connection of the first fixation system to the first end of the hydraulic cylinder is made by means of an articulated linkage and the connection of the second fixation system to the second end of the hydraulic cylinder is made by means of an articulated linkage. These systems allow to change the position of the cylinder electromechanically or hydraulically and to fix them in a determined position hydraulically.

The at least one hydraulic cylinder is the component of the PTO in charge of applying the braking torque on the output mechanical transmission means of the ECD (for example by means of a torque arm that connects the hydraulic cylinder with the output mechanical transmission means of the ECD). Therefore, the applied braking torque is governed by the expression, T=P*Aeq*r, where P is the pressure in the hydraulic high pressure circuit, Aeq is the equivalent area of the hydraulic cylinder on duty (or the sum of areas of the enabled hydraulic cylinders when more than one cylinder are used) and r is the minimum distance between the longitudinal axis of the hydraulic cylinder and the pivoting axis of the output mechanical transmission means of the ECD.

So, the braking force applied by the at least one hydraulic cylinder can be adjusted changing r, P and Aeq.

For a given hydraulic cylinder and for a determined position of the ECD, r is a function of two variables R and L where R is the minimum distance between a pivoting axis of the output mechanical transmission means of the ECD and the first end of the hydraulic cylinder, L is the minimum distance between a plane X and the second end, being X an imaginary plane comprising the pivoting axis and perpendicular to the plane Y defined by the first end and comprising the pivoting axis. X and Y have to be defined in calm sea state (0 meters wave height).

Both distances R and L can be varied by means of the first and second fixation systems cited above. The first fixation system can comprise a first activation system configured to change the position of the first end of the hydraulic cylinder and the second fixation system can comprise a second activation system configured to change the position of the second end of the hydraulic cylinder. The activation can be electromechanical or hydraulic. The first fixation system can comprise a first interlock system configured to fix the position of first end of the hydraulic cylinder and the second fixation system can comprise a second interlock system configured to fix the position of the second end of the hydraulic cylinder. The first and second interlock systems can be hydraulically activated

The pressure in the accumulators is changed modifying the volume of oil inside them.

The equivalent area is determined according to the hydraulic cylinder selected at each instant. This selection is commanded by the valves block.

The PTO of the invention presents a solution to adapt the braking torque applied to the ECD to different sea states by modifying the parameters P, R and L, unlike the solution of US 7,579,704 B2 patent in which only P is varied. The PTO of the invention permits modifying the amplitude and shape of the braking torque curve, while US 7,579,704 B2 patent only allows changing the amplitude of the braking toque. But the most relevant advantage of the PTO of the invention is that the response time is greatly reduced, because the reaction time necessary to vary R and L parameters is much shorter than the one needed to vary P.

Additionally is possible to select the working area (piston area, annulus area or rod area) of each enabled hydraulic cylinder, by means of three electro-valves (part of the valves block). In that way our invention allows also to adapt the braking torque applied to the ECD wave-to-wave within a given sea state.

The flexibility of the PTO to apply different braking torques on the ECD depending on the incident sea state and waves is one of the key factors to maximize the power capture of the WEC; and the PTO of the invention responds to this requirement. Advantageous embodiments are defined in the dependent claims.

### BRIEF DESCRIPTION OF THE DRAWINGS

To complete the description and in order to provide for a better understanding of the invention, a set of drawings is provided. Said drawings illustrate preferred embodiments of the invention, which should not be interpreted as restricting the scope of the invention, but just as an example of how the invention can be embodied. The drawings comprise the following figures:
Figure 1 depicts a block diagram showing the main components of a WEC, indicating that the output of each one of the components connects with the input of the following one.
Figure 2 shows a scheme with the main components of the PTO of the invention. It is a schematic representation that includes only the key components.
Figure 3 shows a scheme with the hydraulic cylinders layout in a preferred embodiment (in which the output transmission means of the ECD is a shaft), where R and L parameters are indicated.
Figure 4 illustrates the arrangement of the hydraulic cylinders and the torque arm in a preferred embodiment, where the transmission means of the ECD is a shaft.
Figure 5 is a detailed representation of the hydraulic scheme applied to a preferred embodiment of the invention.
Figure 6 shows a general 3D view of the invention's layout in a preferred embodiment.
Figure 7 indicates the usable areas of a hydraulic cylinder depending on the hydraulic cylinder movement and handled by three electro-valves, where a(A) is the piston area, b(B) is the annulus area and c(C) corresponds to rod area.
Figure 8 illustrates one block with three electro-valves that controls the movement of one of the hydraulic cylinders of the array.
Figure 9, 10 and 11 show different applications of the invention in different types of actual WECs, where it can be observed how the invention is integrated in other systems

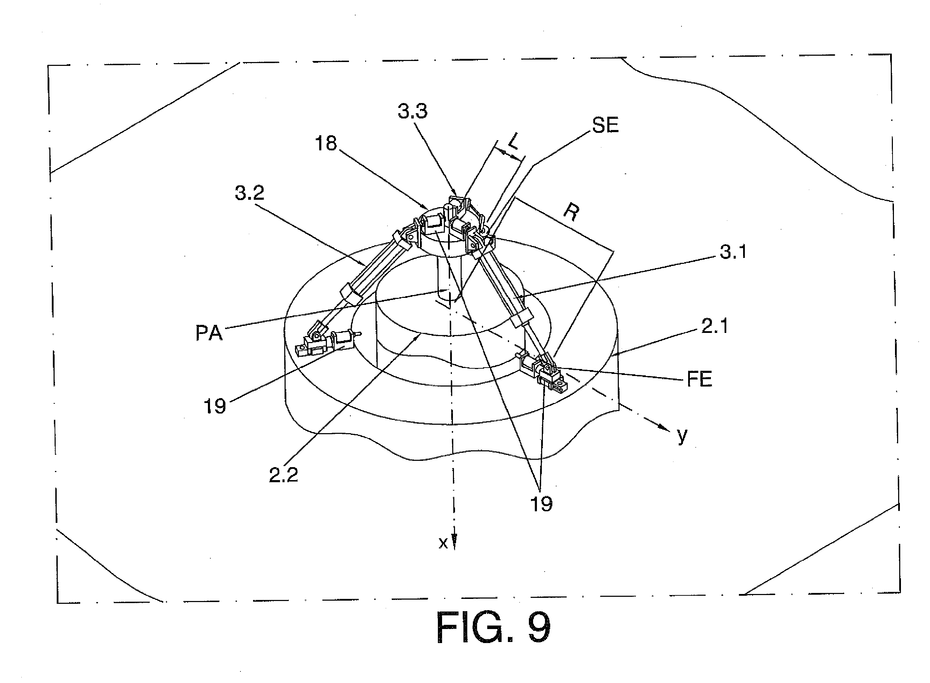

Figure 9 shows an application where the reaction mechanism is based on the relative movement between two floating members.

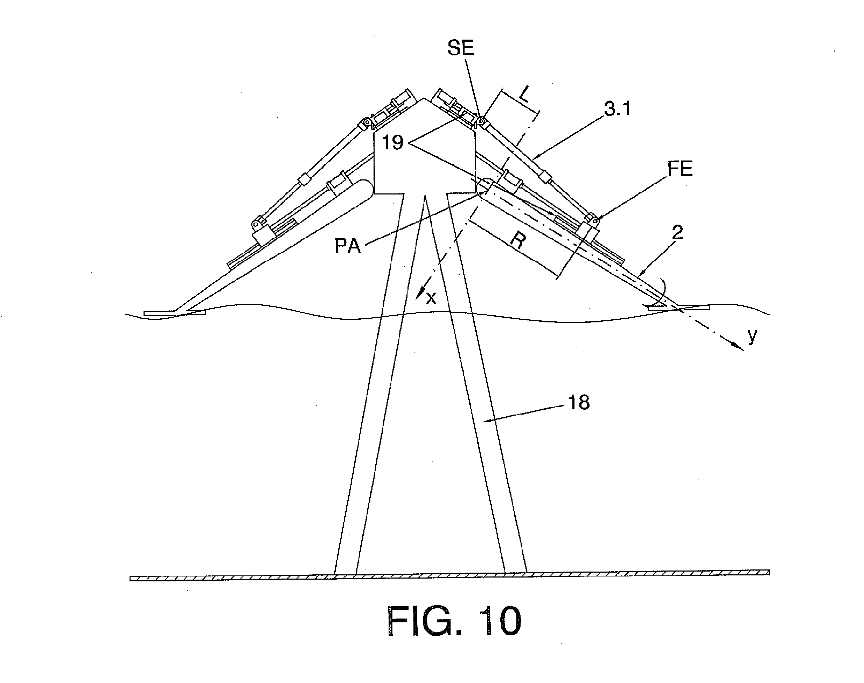

Figure 10 shows an application where the reaction mechanism is based on the movement of a point absorber fixed to a rotating arm.

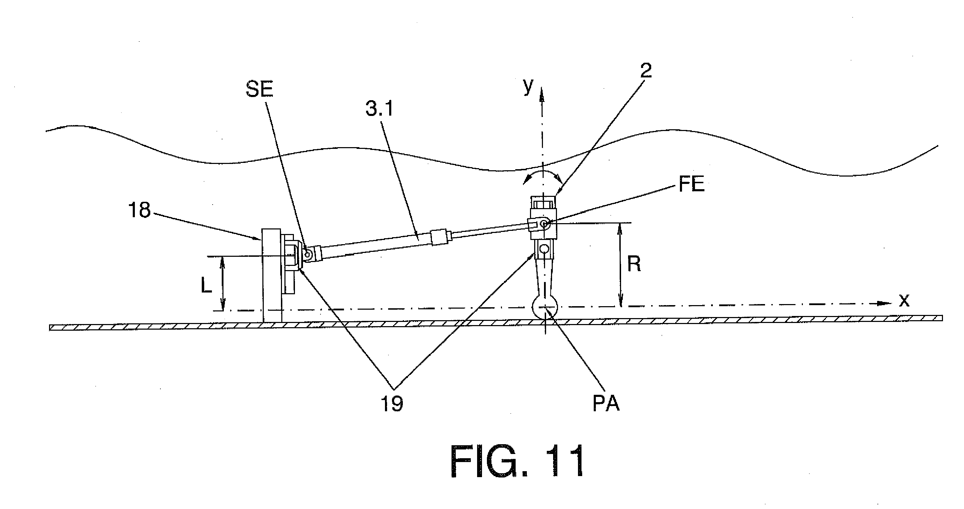

Figure 11 shows an application where the reaction mechanism is based on the movement of a rotating member fixed on the sea bottom.

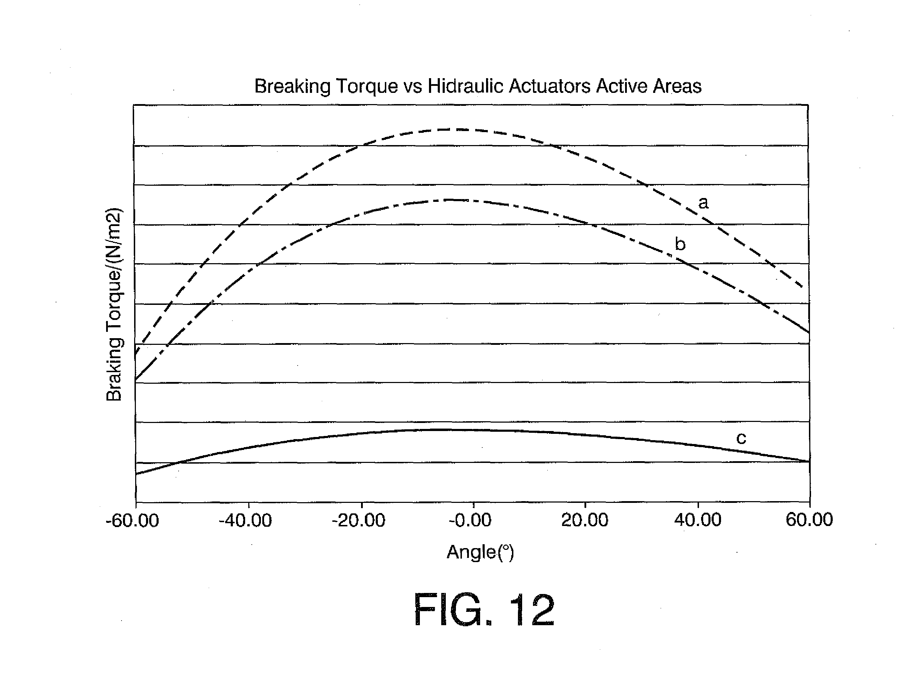

Figure 12 shows the braking torque curves per unit of pressure using the three different areas, a, b and c, of one hydraulic cylinder but keeping R, L and pressure, P, constant.

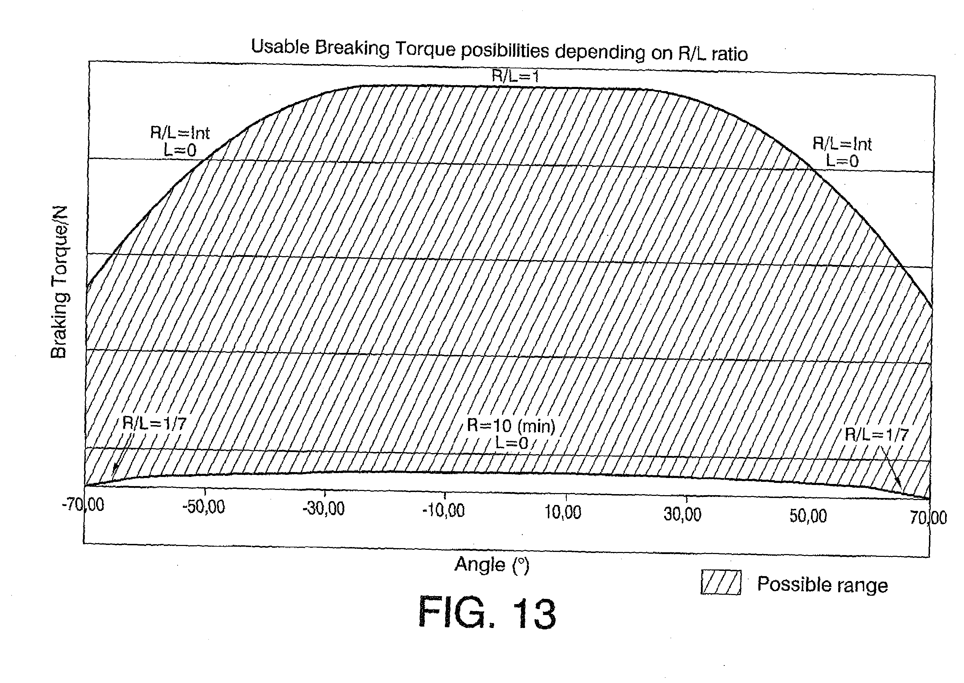

Figure 13 depicts the usable braking torque possibilities per unit of pressure and unit of area, therefore, unit of force, depending on the R/L ratio when the dimensions of the hydraulic cylinder have been defined.

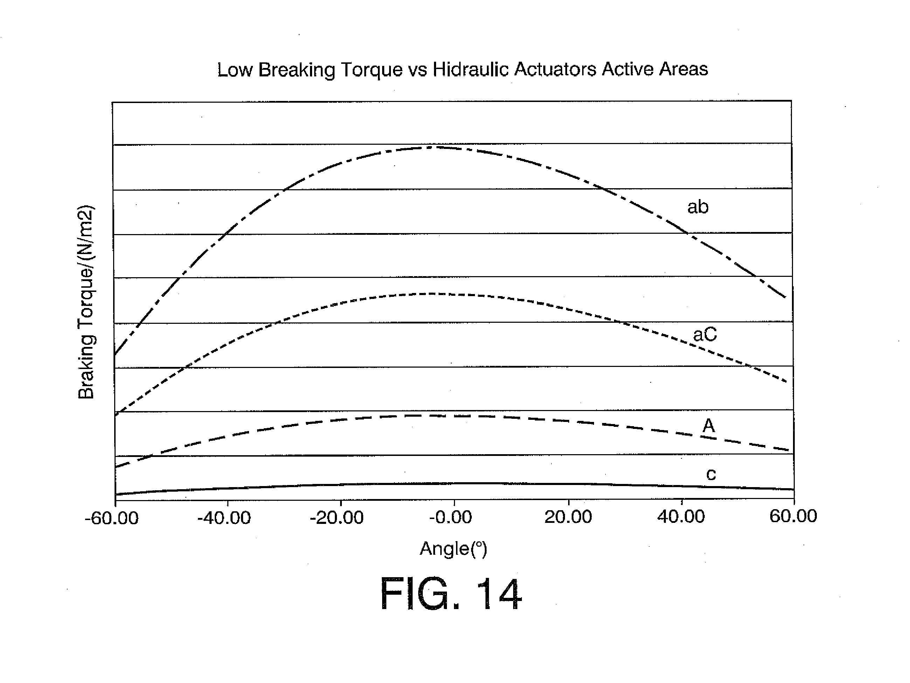

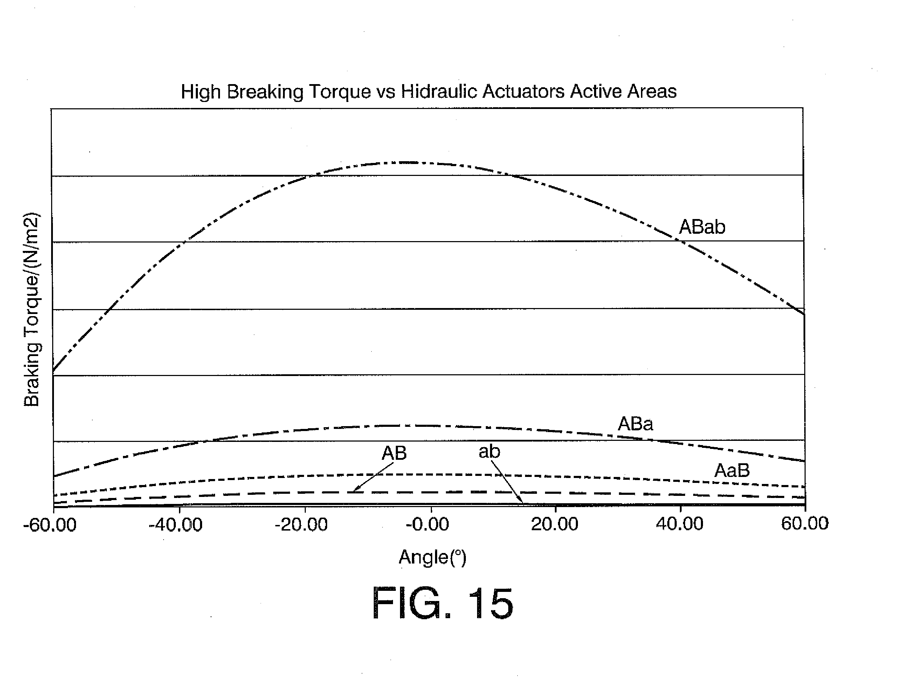

Figures 14 and 15 show the braking torque ranges per unit of pressure when combination of enabled areas of hydraulic cylinders are being used. The figures depict the braking torque per unit of pressure depending on R/L ratio and the dimensions of the defined hydraulic cylinder, where ab, aC, A, c, ABab, ABa, Aab, ab and AB regards to the different areas used. Each letter indicates a different value area where A>B>C, a>b>c, A>a, B>b and C>c.

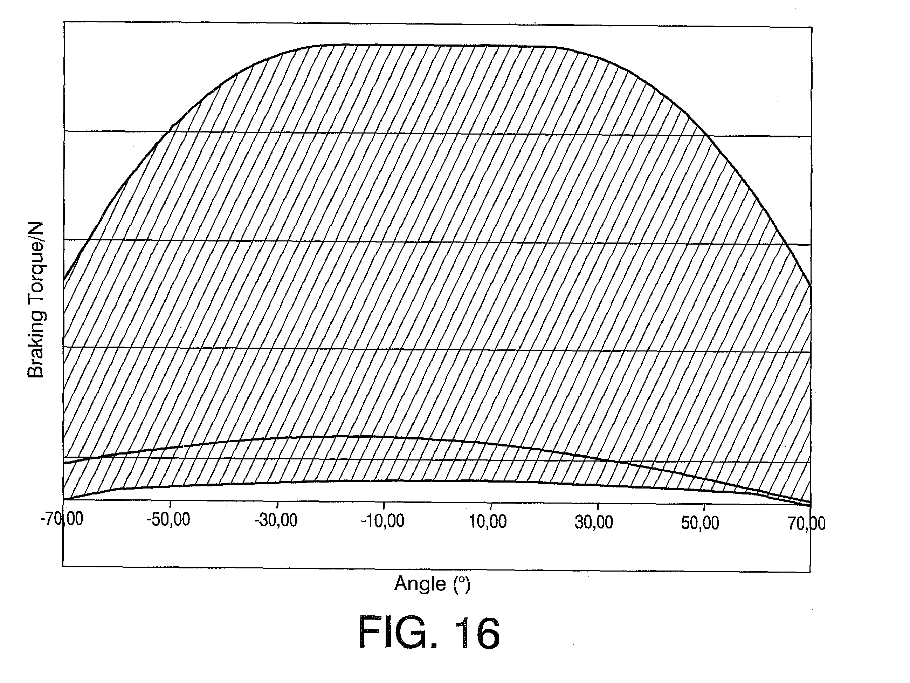

Figures 16 to 21 show different possibilities of control torque curves that can be carried out by the invention depending on the characteristics of a particular hydraulic cylinder.

### DETAILED DESCRIPTION

Figure 1 shows the basic components in a WEC. The output mechanical transmission means (1) of the ECD is coupled to the input mechanical transmission means of the PTO. The PTO applies a variable braking torque/force to the output mechanical transmission means of the ECD. The energy captured by the ECD is absorbed by the PTO applying a braking torque/force on the output mechanical transmission means of the ECD.

The PTO output is also mechanically connected to the electric generator by means of a shaft. A control system manages all the subparts of the WEC.

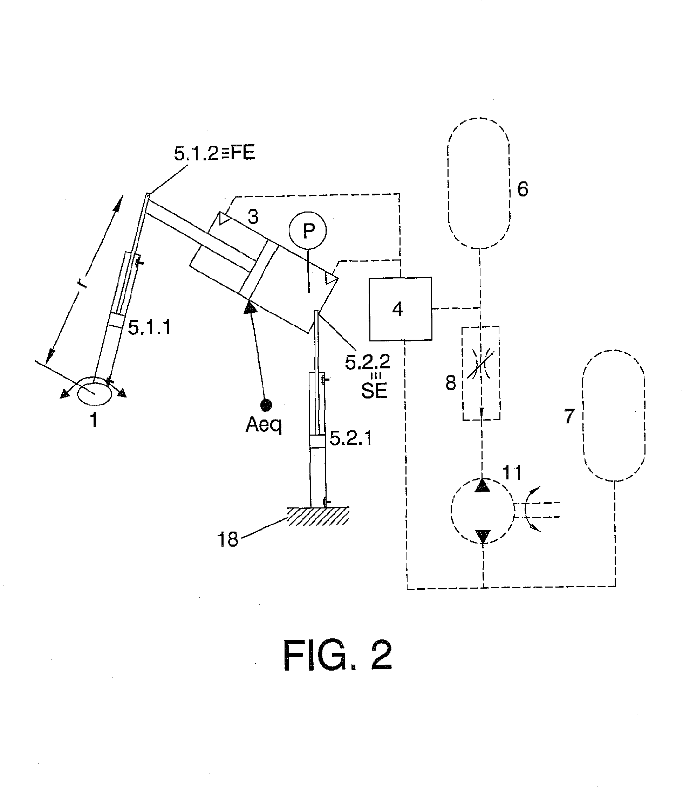

Figure 2 is a schematic representation of a simplified PTO. The PTO of the invention has the following main components: at least one hydraulic cylinder (3) controlled by a valves block(4), at least one high pressure and one low pressure accumulators(6,7), a control valve(8), a hydraulic motor(11) and at least first and second fixation systems(5.1, 5.2) for the hydraulic cylinder (3), each of which with an electromechanical or hydraulic activation system (5.1.1, 5.2.1) and with an hydraulic interlock (5.1.2, 5.2.2).

A first fixation system (5.1) connects the first end (FE) of the hydraulic cylinder (3) with the ECD output mechanical transmission means (1), while a second fixation system (5.2) connects the second end (SE) of the hydraulic cylinder (3) with the structure (18) of the WEC. In the figures the first end (FE) is the rod extreme and the second end (SE) is the base of the cylinder, but the first end (FE) could be the base and the second end (SE) the rod extreme. The first fixation system (5.1) and second fixation system (5,2) connect to the first and second ends (FE, SE) of the hydraulic cylinder (3) by means of articulated linkages and comprise a first activation system (5.1.1) configured to change the position of the first end (FE) of the hydraulic cylinder (3) and a second activation system (5.2.1) configured to change the position of the second end (SE) of the hydraulic cylinder (3). The activation can be electromechanical or hydraulic. The first fixation system (5.1) comprises a first hydraulic interlock system (5.1.2) configured to fix the position of first end (FE) of the hydraulic cylinder (3) and the second fixation system (5.2) comprises a second hydraulic interlock system (5.2.2) configured to fix the position of the second end (SE) of the hydraulic cylinder (3).

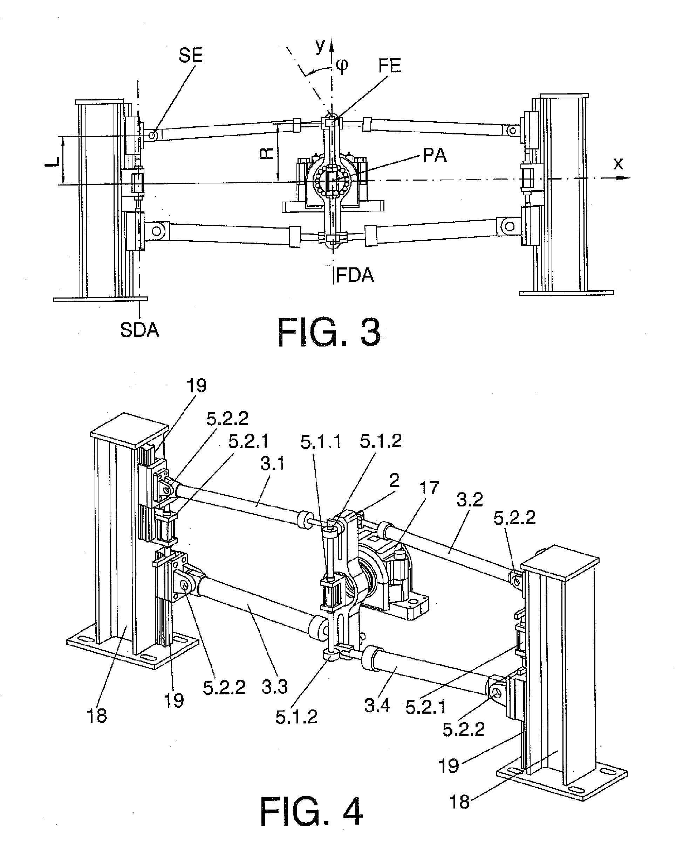

Figures 3 and 4 show an arrangement of hydraulic cylinders(four cylinders in this case) in a preferred embodiment.

The four hydraulic cylinders (3.1, 3.2, 3.3 and 3.4) are the components of the PTO in charge of applying the braking torque on the output mechanical transmission means (1) of the ECD, by means of a torque arm (2) that connects each cylinder (3.1, 3.2, 3.3 and 3.4)with the output mechanical transmission means (1) of the ECD. Therefore, the applied braking torque is governed by the expression, T=P*Aeq*r, where P is the pressure inside the cylinders, Aeq is the equivalent area of the hydraulic cylinders (3.1, 3.2, 3.3 and 3.4) on duty (sum of the cylinder areas of the enabled hydraulic cylinder during the movement of the PTO input mechanical transmission means) and r is the minimum distance between the longitudinal axis of the hydraulic cylinder and the pivoting axis of the output mechanical transmission means of the ECD.

The braking force applied by the cylinder can be adjusted changing R, L, P and Aeq. The parameters R, L, P and Aeq can be independently adjusted to apply a variable braking torque to the output mechanical transmission means (1) of an ECD.

For a given cylinder (3.1, 3.2, 3.3, 3.4) and for a determined position of output mechanical transmission means (1) of the ECD, r is a function of two variables R and L. R is the minimum distance between a pivoting axis (PA) of the output mechanical transmission means (1) of the ECD and the first end (FE) of the hydraulic cylinder(s), L is the minimum distance between X plane and the second end (SE) of the hydraulic cylinder, being X an imaginary plane comprising the pivoting axis (PA) and perpendicular to a plane Y defined by the first end (FE) and comprising the pivoting axis (PA). X and Y have to be defined in calm sea state (0 meters wave height).

Both distances R and L can be varied by means of the first and second fixation systems (5.1, 5.2) cited above, by means of first and second electromechanical or hydraulic activation systems (5.1.1, 5.2.1) and first and second hydraulic interlock systems (5.1.2, 5.2.2).

Hydraulic cylinders (3.1, 3.2, 3.3, 3.4) on duty supply oil to the circuit through the active valves (4.1, 4.2, 4.3 and 4.4). The rods of hydraulic cylinders (3.1, 3.2, 3.3, 3.4) start moving once the torque of the energy capture device is enough to compress the oil inside the chambers of selected hydraulic cylinders (3.1, 3.2, 3.3, 3.4) up to the pressure value (P) of the oil contained inside the high pressure accumulators (6) . The greater the volume of oil in the high pressure accumulator (6), the greater the pressure inside it. Therefore, by opening and closing valves block (4) and/or opening the control valve (8), oil can be introduced in or extracted from the accumulators (6) and, in this way, working pressure in the hydraulic cylinders (3.1, 3.2, 3.3, 3.4) may be modified.

The value of Aeq used for applying the braking torque depends on the enabled hydraulic cylinders (3.1, 3.2, 3.3, 3.4). The activation of hydraulic cylinders will be executed by means of valves blocks assigned to each one of those hydraulic cylinders (3.1, 3.2, 3.3, 3.4). Additionally is possible to select the working area (piston area (a), annulus area (b) or rod area (c)) of each enabled hydraulic cylinder (3.1, 3.2, 3.3, 3.4), by means of three electro-valves EV1, EV2 and EV3 part of the valves blocks (4.1, 4.2, 4.3, 4.4).

P, R and L parameters are set depending on sea states, meanwhile the selection of the working areas (a, b, c) of the hydraulic cylinders (3.1, 3.2, 3.3, 3.4) is adjusted depending on every individual coming wave for a given sea state.

P, R and L parameters can be fixed during a complete sea state (i.e hours), while the selection of the working area (a,b,c) of the hydraulic cylinders (3.1, 3.2, 3.3, 3.4) can be optimized depending on the amplitude of an individual coming wave. Within a sea state, the wave amplitude varies every few seconds or minutes. This means that the selection of the working areas (a, b, c) varies every few seconds. The selection of the working areas set the instantaneous amplitude of braking torque.

Figure 4 illustrates more precisely the arrangement of the hydraulic cylinders (3.1, 3.2, 3.3, 3.4) and the torque arm (2). The first end (FE) of the hydraulic cylinders (3.1, 3.2, 3.3, 3.4) is fastened to the torque arm (2) and the second end (SE) of the hydraulic cylinders (3.1, 3.2, 3.3, 3.4) is fastened to a WEC structure (18), the fastening of the hydraulic cylinders (3.1, 3.2, 3.3, 3.4) to the torque arm (2) and WEC structure (18) is carried out by means of ball and socket joints on linear guides (19) such as to allow a displacement of the first end (FE) of the cylinders (3.1, 3.2, 3.3, 3.4) along a first displacement axis (FDA) passing through the first end (FE) and perpendicular to the pivoting axis (PA) and the displacement of the second end (SE) along a second displacement axis (SDA) passing through the second end (SE) and parallel to the first displacement axis (FDA), and in that way allow varying the position of hydraulic cylinders, R and L parameters, hence, r. The displacement axis (FDA, SDA) have to be defined at calm sea state (o meters wave hight). The activation command to displace the hydraulic cylinders along linear guides is done by the first and second activation system (5.1.1, 5.2.1) which can be electric (ball screws powered by a motor) or hydraulic (hydraulic cylinder). Once the hydraulic cylinders (3.1, 3.2, 3.3, 3.4) are placed at required distances, the first and second electro-hydraulic interlock systems (5.1.2, 5.2.2) fixes them (its stand-by position interlocks the position of hydraulic cylinders).

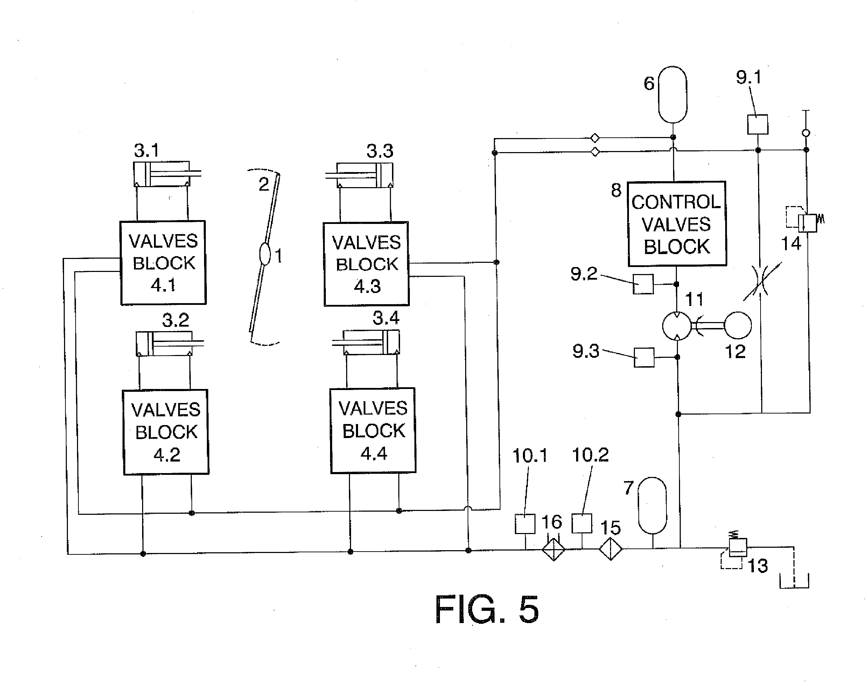

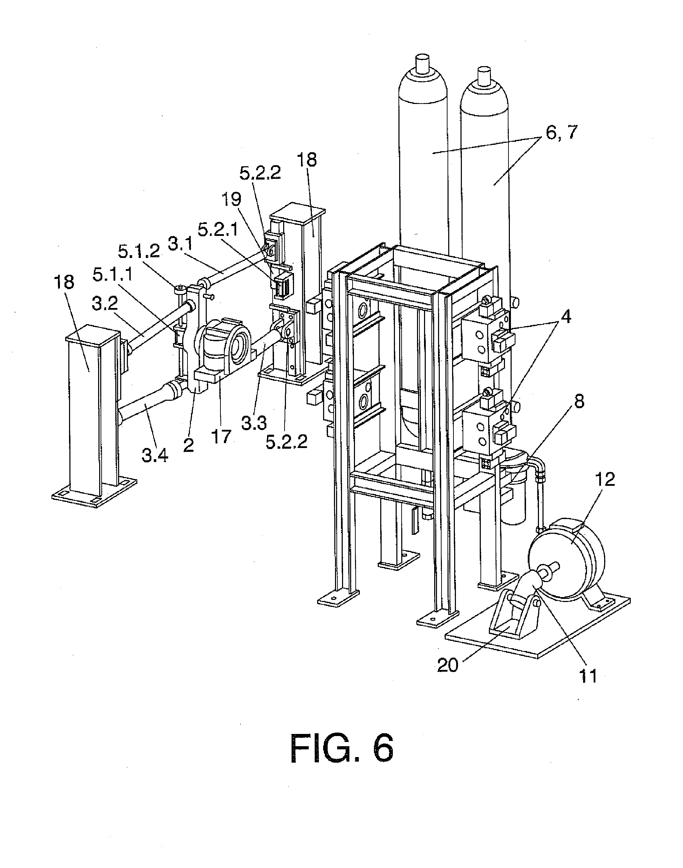

Figure 5 illustrates the simplified hydraulic scheme of the invention and figure 6 shows a preferred implementation of the invention.

The array of cylinders (3.1, 3.2, 3.3, 3.4) fastened to the torque arm (2) coupled to the output mechanical transmission means (1) of the ECD may comprise at least one hydraulic cylinder. This means that possible working areas, (Aeq), used for applying braking torques depends on the enabled hydraulic cylinders (3.1, 3.2, 3.3, 3.4). The selection of working areas (a, b, c) of each enabled hydraulic cylinder and the activation of hydraulic cylinders (3.1, 3.2, 3.3, 3.4) will be executed by means of valves blocks (4.1, 4.2, 4.3, 4.4) assigned to each one of those hydraulic cylinders (3.1, 3.2, 3.3, 3.4).

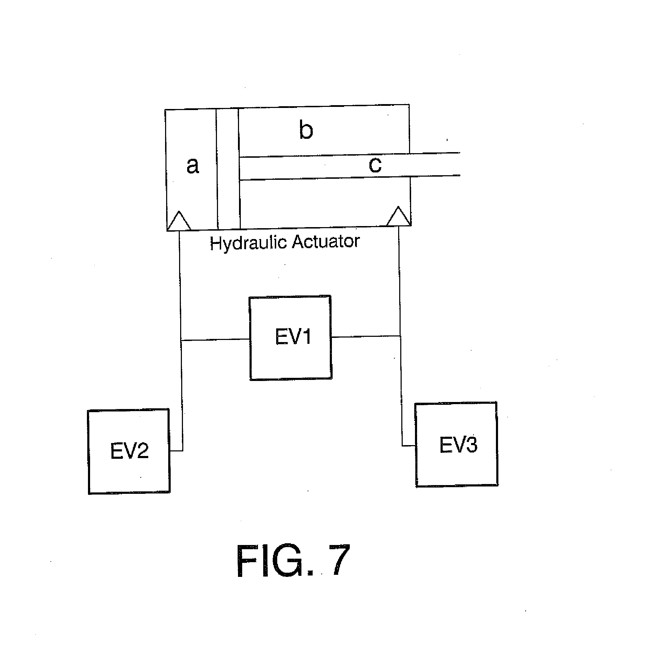

Both chambers of each hydraulic cylinder (3.1, 3.2, 3.3, 3.4) are linked to the high (6) and low (7) pressure accumulators through a block of electro-valves and check valves, hereinafter referred to as valves block (4.1, 4.2, 4.3, 4.4). The function of the valves blocks (4.1, 4.2, 4.3, 4.4) is to feed the hydraulic cylinders (3.1, 3.2, 3.3, 3.4) with the oil of the low pressure accumulator (7) and permit to pump the oil back to the high pressure accumulator (6). Furthermore, they allow the deactivation of the non selected hydraulic cylinders (3.1, 3.2, 3.3, 3.4) in each case, connecting both chambers of those hydraulic cylinders, by means of the activation of the electro-valves EV1 and EV3 (figure 7), of each deactivated hydraulic cylinder (3.1, 3.2, 3.3, 3.4), to the low pressure accumulator(7).

Once the curve of the braking torque has been totally set, the hydraulic cylinders (3) rods start displacing when the applied torque of the energy capture device is higher than the reaction/braking torque of the hydraulic cylinders. This movement generates a flow from the hydraulic cylinders (3) to the high pressure accumulators (6) and the control valve (8). Keeping the control valve (8) completely closed, the oil pumped by the activated hydraulic cylinders (3) goes to the high pressure accumulator (6), hence, increasing the pressure in the hydraulic circuit while the incoming power of the waves is able to overcome the braking torque. Opening the control valve (8), oil flows through the hydraulic motor (11) rectifying the oil pumped by the hydraulic cylinders (3) and feeding the hydraulic motor (11) with a constant flow depending on the control valve (8) position. For a given sea state the control valve (8) is adjusted in order to achieve a required speed value in the electric generator (12), which will remain inside a range to maximize the efficiency of the system. Thus, the hydraulic motor (11) actuates on the shaft of the electric generator applying a rotation that is continuous, unidirectional, of high frequency, low torque and minimum power fluctuations within a given sea state. The low pressure accumulators (7) receive the motor (11) output oil and feed the hydraulic cylinders (3) again.

The PTO device operates in a closed circuit, which minimizes the maintenance necessities. This kind of circuit needs some auxiliary systems, such as: safety valves (13 and 14), oil filtering system (15) and heat exchanger (16).

Every hydraulic circuit usually have two safety valves, one of them placed in the high pressure line (14) and the other one connected to the low pressure line (13). A filtering system (15) and a heat exchanger (16) are implemented in order to ensure a reliable performance of the oil during extended periods of time.

The high and low pressure accumulators (6, 7) are disposed vertically on the structure (5). The hydraulic motor (11) and the electric generator (12) are placed next to this structure (20).

Figure 7 is an squematic representation of the different usable areas by a hydraulic cylinder, piston area (a), annulus area (b) or rod area (c), depending on the electro-valves state (EV1, EV2, EV3) and the hydraulic cylinder (3) movement.

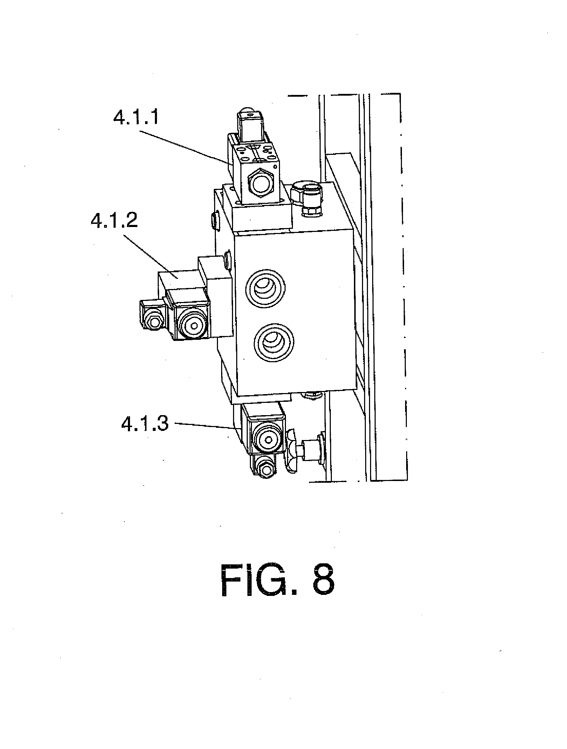

Figure 8 illustrates a valves block (4.1) with the electro-valves (4.1.1, 4.1.2 and 4.1.3) that controls the movement of one of the hydraulic cylinders (3.1) of the array of cylinders (3.1, 3.2, 3.3, 3.4). The electro-valves and check valves that connect the chambers of the hydraulic cylinders with the high or low pressure accumulators are integrated in this valves block.

Figures 9 to 11 illustrate different implementations of the present invention in existing WECs.

In each figure, the parameters R and L have been identified Each wave energy converter has a rotation or pivoting axis, PP, in the transmission means. R is the distance between that pivoting or rotation axis (PA) of the energy capture device and the first end (FE) of the hydraulic cylinder (3), and L is the distance between a plane X and the second end (SE) of the hydraulic cylinder, being X an imaginary plane comprising the pivoting axis (PA) and perpendicular to the plane Y passing through the first end (FE) and comprising the pivoting axis (PA). X and Y have to be defined in calm sea state (0 meters wave height). Defined R and L, r is the minimum distance between the longitudinal axis of the hydraulic cylinder and the pivoting axis of the output mechanical transmission means of the ECD.

The invention permits different possibilities of braking torque curves, all of them variations of rectified quasi-sinusoidal waves depending on the used hydraulic cylinders: asymmetric quasi-sines of different amplitudes, centred quasi-sines with different amplitudes, etc. The profile of sea waves is similar to a sine.

In the preferred implementation, Figure 6, when only one hydraulic cylinder is enabled and R, L and the pressure of the high pressure accumulator are set, there are three braking torque possibilities depending on the selected area of the hydraulic cylinder and the movement of the torque arm (2) coupled to the output mechanical transmission means (1). They have been depicted in Figure 12.

In Figure 13 the limits of the braking torque when only one hydraulic cylinder is used are established. These limits depend on the R, L parameters once the hydraulic cylinder has been selected. The shady area corresponds to the braking torque possibilities per unit of area and unit of pressure (m²*N/m²), therefore, per unit of force.

Figures 14 and 15 show the braking torque per unit of pressure of the preferred embodiment when different possible combinations of areas are applied, being A, B and C hypothetical areas of hydraulic cylinders 3.3 and 3.4 and a, b and c, hypothetical areas of hydraulic cylinders 3.1 and 3.2. The higher the number of used areas (more hydraulic cylinders), the higher the braking power (braking torque) of the PTO.

Figures 16 to 19 show the different possibilities of braking torque control curves per unit of pressure and unit of area, of the preferred embodiment that the PTO of the invention permits, when one cylinder is being used and R/L ratio has been modified. All of the possible braking torque values per unit of pressure and unit of area are inside of the shady areas of the figures.

Considering the preferred embodiment, the type of curves shown in the graphs represents the variation of the control torques applied by one cylinder versus the angular displacement of the inlet shaft, that means, the mechanical transmission means of the energy capture device (2), from its vertical axis.

The braking torque curves shown in Figure 16 to 19 are variations of rectified quasi-sinusoidal waves: quasi-sines of different amplitudes, centred quasi-sines with different amplitudes, etc. R and L parameters determine the braking torque curve once hydraulic cylinder(s) has been defined.

Figure 16 shows a braking torque per unit of pressure and unit of area in which the maximum value is shifted from the centre and it can be considered steady. The curve is located in the bottom of the range and it corresponds to a ratio R/L=1/6 using hydraulic cylinder 3.2.

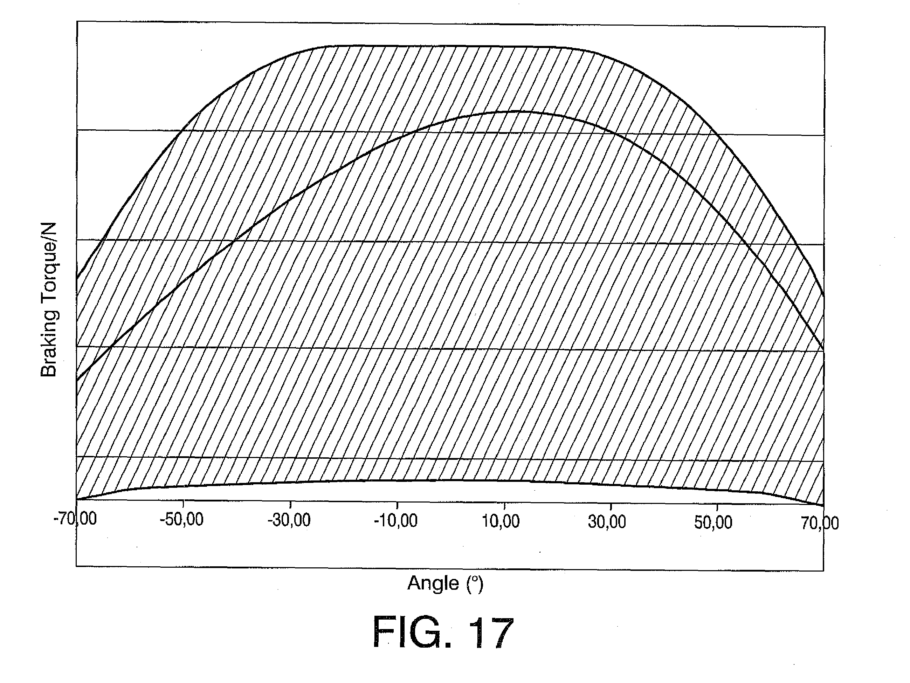

Figure 17 shows a braking torque per unit of pressure and unit of area in which the maximum value is shifted from the centre and it can be considered quasi-sinusoidal off centre curve. The curve corresponds to a ratio R/L=6 using hydraulic cylinder 3.2.

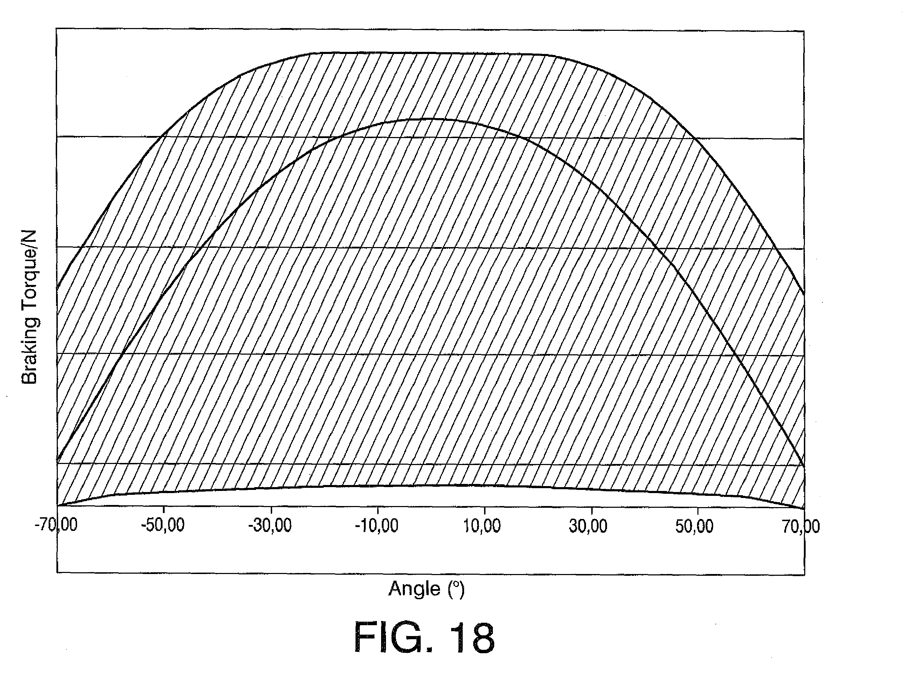

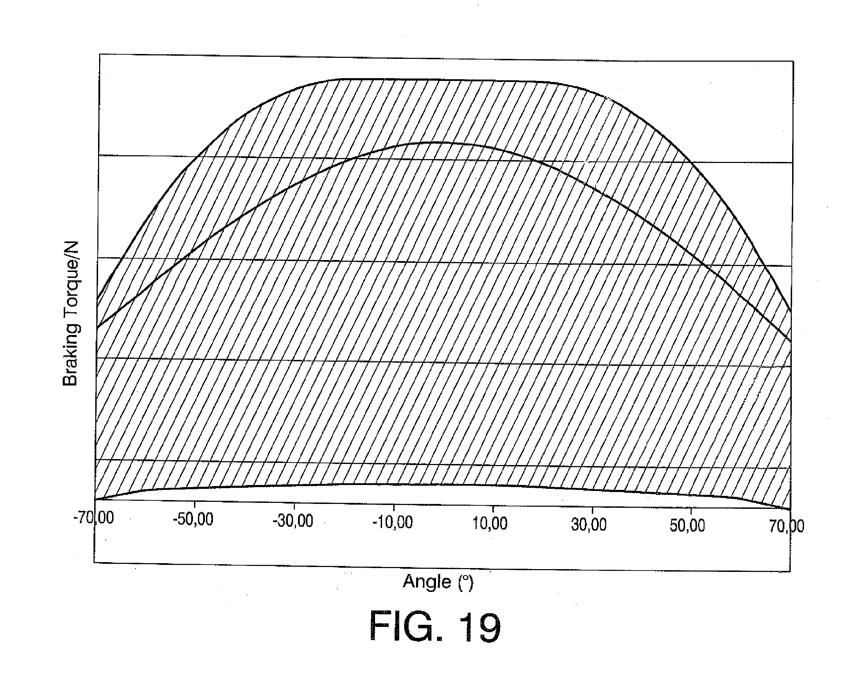

Figures 18 and 19 show a braking torque per unit of pressure and unit of area in which the maximum value is placed in the centre and it can be considered quasi-sinusoidal curve. It can be considered medium-upper braking torque per unit of pressure and unit of area. This curve is applied when two hydraulic cylinders fulfilling the area relationships b=A and a=B, are symmetrically fixed, i.e., 3.1 and 3.2, but only one is being used between the range -70° to 0° and the other between 0° and 70°, that means the same area of hydraulic cylinder is being used but using symmetric torque arm.

The differences between them involve the active cylinder depending on the movement of the mechanical transmission means of the preferred implementation. That means, under counterclockwise (CCW) movement or clockwise (CW) movement using two hydraulic cylinders which fulfil the area relationship A=b and a=B, the active braking torque per unit of pressure and unit of area can be both, first active 3.1 hydraulic cylinder up to 0° and afterwards activate 3.2 hydraulic cylinder or activate first 3.2 cylinder up to 0° and afterwards activate 3.1.

When areas of hydraulic cylinder greater than the unit of area and/or combinations of areas of different hydraulic cylinders are being used, the braking torque exceeds the limits established in Figure 13.

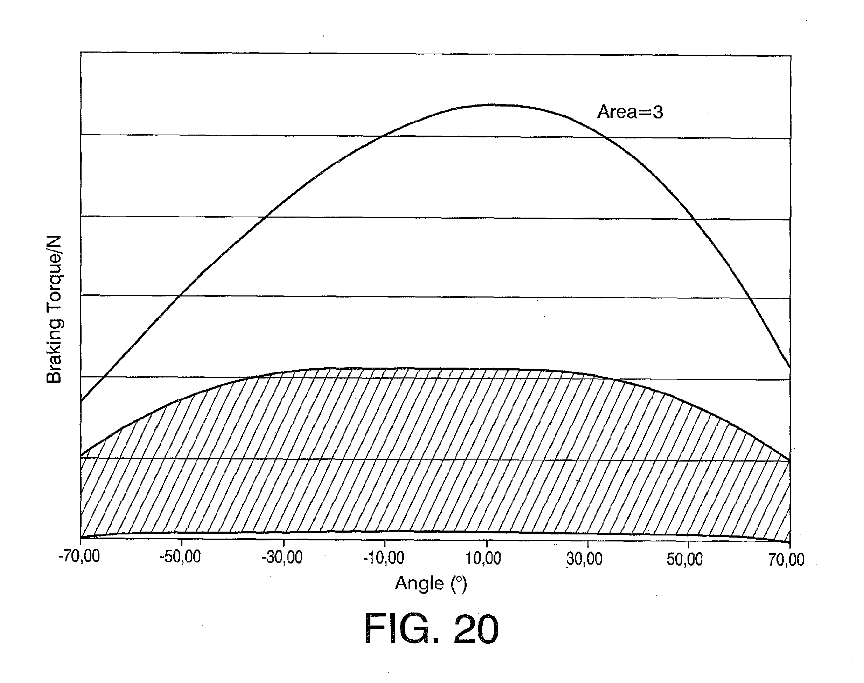

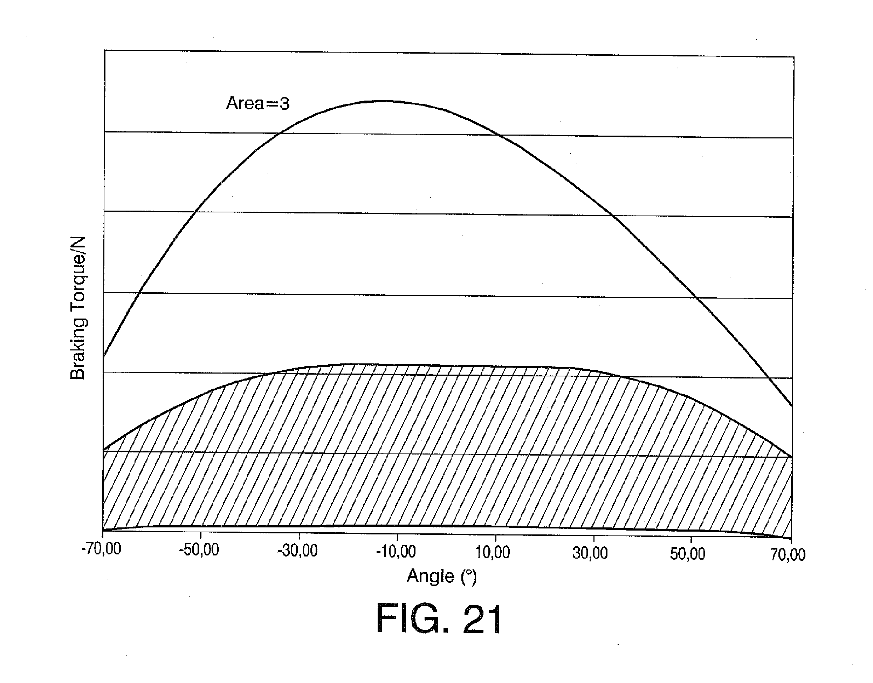

Figure 20 and 21 show the braking torque per unit of pressure curve out of the limits when combinations of areas of hydraulic cylinder are being used regarding to the preferred implementation (Figure 7 and 8).

Figure 20 illustrates the braking torque curve using a relationship between areas of 3, that means, hydraulic cylinder 3.1 and 3.4 are being used under a specified pressure level.

Figure 21 depicts the braking torque curve using a relationship between areas of 3, that means, hydraulic cylinder 3.2 and 3.3 are being used under a specified pressure level.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Power take off (PTO) device for wave energy converters that comprises at least one hydraulic cylinder (3) connected to the output mechanical transmission means (1) of an energy capture device (ECD) of the wave energy converter (WEC), capable of applying a variable braking torque to the output mechanical transmission means (1) through the hydraulic cylinder (3), **characterized by** comprising a first fixation system (5.1) connecting a first end (FE) of the at least one cylinder (3) to the output mechanical transmission means (1) of the ECD and a second fixation system (5.2) connecting a second end (SE) of the at least one hydraulic cylinder (3) with the structure (18) of the wave energy converter, the first and second fixation systems (5.1, 5.2) being connected to the first end (FE) and second end (SE) of the hydraulic cylinder (3) by means of articulated linkages and wherein the first fixation system (5.1) and the second fixation system (5.2) are configured to change the position of the at least one hydraulic cylinder (3) by varying a distance L and a distance R , where R is the minimum distance between a pivoting axis (PA) of the output mechanical transmission means (1) of the energy capture device and the first end (FE) of the at least one hydraulic cylinder (3) and L is the minimum distance between a plane X and the second end (SE) of the at least one hydraulic cylinder (3), being X an imaginary plane comprising the pivoting axis (PA) and perpendicular to a plane (Y) passing through the first end (FE) and comprising the pivoting axis (PA), defined at calm sea state.

2. Power take off device for wave energy converters according to claim 1, wherein the first fixation system (5.1) comprises a first activation system (5.1.1) configured to change the position of the first end (FE) of the hydraulic cylinder (3) and the second fixation system (5.2) comprises a second activation system (5.2.1) configured to change the position of the second end (SE) of the hydraulic cylinder (3).

3. Power take off device for wave energy converters according to claim 2 wherein the first fixation system (5.1) comprises a first interlock system (5.1.2) configured to fix the position of first end (FE) of the hydraulic cylinder (3) and the second fixation system (5.2) comprises a second interlock system (5.2.2) configured to fix the position of the second end (SE) of the hydraulic cylinder (3)

4. Power take off device for wave energy converters according to any of previous claims, comprising a valves block (4) to connect the at least one hydraulic cylinder (3) with at least one high pressure and one low pressure accumulators(6,7), the valves block (4) comprising electro-valves (EV1, EV2, EV3) configured to select a working area for the at least one hydraulic cylinder (3), the working area being a piston area (a), an annulus area (b) or a rod area (c).

5. Power take off device for wave energy converters according to any of the previous claims, comprising a control valve (8) and an hydraulic motor (11), the control valve (8) is configured to control the oil flow from the hydraulic cylinder (3) to the hydraulic motor.

6. Power take off device for wave energy converters according to any of the previous claims, comprising a torque arm (2) adapted to be connected with the output mechanical transmission means (1) of the energy capture device, wherein the first end (FE) of the at least one hydraulic cylinder (3.1, 3.2, 3.3, 3.4) is fastened to the torque arm (2) and the second end (SE) of the at least one hydraulic cylinder (3.1, 3.2, 3.3, 3.4) is fastened to a WEC structure (18), the fastening of the at least one hydraulic cylinder (3.1, 3.2, 3.3, 3.4) to the torque arm (2) and WEC structure (18) is carried out by means of ball and socket joints on linear guides (19) such as to allow a displacement of the first end (FE) of the cylinders (3.1, 3.2, 3.3, 3.4) along a first displacement axis (FDA) passing through the first end (FE) and perpendicular to the pivoting axis (PA) and the displacement of the second end (SE) along a second displacement axis (SDA) passing through the second end (SE) and parallel to the first displacement axis (FDA), defined at calm sea state.
